# EUROPEAN PATENT APPLICATION

(11) **EP 1 603 172 A1**
(43) Date of publication of application: **07.12.2005**
(21) Application number: 05011645.8
(22) Date of filing: 30.05.2005
(51) Int. Cl.: H01L 35/32, H01L 35/08, G01N 21/72, F24C 3/12, F24C 5/16

(54) **Carbon dioxide concentration measuring device, method of measuring carbon dioxide concentration and burning appliance therefor**

(30) Priority: 31.05.2004 JP 2004162149
(71) Applicant: TDK Corporation, Tokyo 103-8272 (JP)
(72) Inventor: Asatani, Takashi, Tokyo 103-8272 (JP); Shibue, Akira, Tokyo 103-8272 (JP)
(74) Representative: Müller - Hoffmann & Partner

(57) **Abstract**

A carbon dioxide concentration measuring device or a method of measuring carbon dioxide concentration which can measure the carbon dioxide concentration in outside air with high accuracy is provided. A carbon dioxide sensor mounted in a heating appliance includes a generator which generates electric power through the use of combustion heat, more specifically through directly converting the heat energy of combustion heat from a flame for heating into electrical energy. The carbon dioxide sensor operates through the use of electrical energy generated by the generator, so unlike a carbon dioxide sensor in a related art which operates through the use of a consumable power source such as a dry cell, as long as electrical energy is generated by the generator, the emission intensity of infrared rays does not change with time, or a computing process by a control circuit is not impeded, so an error due to a change in the emission intensity of infrared rays or the impediment to the computing process by the control circuit in the result of measurement of carbon dioxide concentration is impeded.

## Description

### BACKGROUND OF THE INVENTION

### 1. Field of the Invention

The present invention relates to a carbon dioxide concentration measuring device which is used to measure the carbon dioxide concentration in outside air, a method of measuring carbon dioxide concentration for measuring the carbon dioxide concentration in outside air, and a burning appliance having a function of measuring carbon dioxide concentration.

### 2. Description of the Related Art

Various burning appliances which exert various effects through the use of combustion heat have been hitherto known. As the burning appliances, for example, heating appliances which exert a heating effect through the use of combustion heat have been widely used in the world, and various kinds of heating appliances having heating performance according to conditions such as the climate of an area where the heating appliances are used are known. In recent years, the heating appliances need another function in addition to the heating function in terms of safety standards and environmental protection.

In one example, in Europe, kerosene stoves using a blue flame burner or a white flame are widely used as the heating appliance, and for the purpose of preventing the advance of global warming on a European scale, there is a desire to measure carbon dioxide concentration in the heating appliances of this kind. If necessary, a heating appliance having a function of measuring carbon dioxide concentration measures the carbon dioxide concentration in outside air, that is, air in a room where the kerosene stove is used, and when the carbon dioxide concentration is equal to or higher than a specified value, its user stops the kerosene stove if necessary.

Some techniques regarding a carbon dioxide concentration measuring system have been previously known. More specifically, for example, a system which measures carbon dioxide concentration through the use of a property of infrared rays being absorbed by carbon dioxide, that is, through the use of a property of carbon dioxide absorbing infrared rays in a specific wavelength range has been known (for example, refer to Japanese Unexamined Patent Application Publication No. Hei 05-060687 and "carbon dioxide sensor CO2-103R" in the homepage of Gastec Corporation (URL:http://www.gastec.co.jp/seihin/sensa/red_sensa.htm)). In the carbon dioxide concentration measuring system of this kind, a light-receiving device (an infrared sensor) receives infrared rays emitted from an infrared source (a light source) such as a filament bulb to outside air, and on the basis of a change in the intensity of infrared rays (a difference between the emission intensity of infrared rays emitted from the light source and the detection intensity of infrared rays detected by the infrared sensor), an arithmetic circuit computes the rate of infrared rays absorbed by carbon dioxide so as to measure the carbon dioxide concentration in outside air. The above-described carbon dioxide concentration measuring system is typically activated by a consumable power source such as a dry cell. The carbon dioxide concentration measuring system of this kind has been already commercialized as a carbon dioxide sensor, and heating appliances including the carbon dioxide sensor have been already commercialized, too.

In the case where the heating appliance includes the carbon dioxide concentration measuring system, in order to measure carbon dioxide concentration with high accuracy, it is necessary to secure the accuracy of measurement of carbon dioxide concentration. However, in a carbon dioxide concentration measuring system in a related art, the accuracy of measurement of carbon dioxide concentration may be degraded due to, for example, the structural factor that the system uses a consumable power source such as a dry cell. More specifically, in the carbon dioxide concentration measuring system in the related art, as the infrared source, the arithmetic circuit or the like is activated through the use of a dry cell, the emission intensity of infrared rays may change with time, or a computing process by the arithmetic circuit may be impeded (the arithmetic circuit may not perform the computing process properly) depending upon the extent of consumption of the dry cell, so an error may be included in the result of measurement of carbon dioxide concentration due to a change in the emission intensity of infrared rays or the impediment to the computing process by the arithmetic circuit.

In order to overcome the above-described issue in the carbon dioxide concentration measuring system in the related art, for example, in order to prevent an error from being included in the result of measurement of carbon dioxide concentration due to the change in the emission intensity of infrared rays or the impediment to the computing process by the arithmetic circuit, the dry cell may be replaced with a new one frequently so that the emission intensity of infrared rays does not change, and the computing process by the arithmetic circuit is not impeded. However, measures which need the replacement of the dry cell cost time and money, because it is necessary to replace the dry cell with a new one frequently. Moreover, for example, in expectation of an error included in the result of measurement of carbon dioxide concentration due to the change in the emission intensity of infrared rays or the impediment to the computing process by the arithmetic circuit, measures to correct the result of measurement of carbon dioxide concentration through the use of a correction arithmetic circuit to eliminate the error may be regarded as another measure. However, the measures which use the correction arithmetic circuit make the structure of the heating appliance complicated, and causes an increase in cost, because it is necessary for the heating appliance to further include the correction arithmetic circuit.

In summary, in the heating appliance including the carbon dioxide concentration measuring system, in order to prevent the change in the emission intensity of infrared rays with time and the impediment to the computing process by the arithmetic circuit, for example, the light source or the arithmetic circuit may operate not on a consumable power source such as a dry cell but on a non-consumable power source such as an outlet. However, a portable heating appliance typified by the above-described kerosene stove, that is, a heating appliance which is supposed to be portably used without using the outlet is not necessarily used in a place where the outlet is available. Therefore, as described above, as long as the light source or the arithmetic circuit operates on the consumable power source such as a dry cell, an error can be included in the result of measurement of carbon dioxide concentration.

### SUMMARY OF THE INVENTION

In view of the foregoing, it is a first object of the invention to provide a carbon dioxide concentration measuring device or a method of measuring carbon dioxide concentration which is capable of measuring the carbon dioxide concentration in outside air with high accuracy.

Moreover, it is a second object of the invention to provide a burning appliance which has a function of measuring the carbon dioxide concentration in outside air, and is capable of measuring the carbon dioxide concentration in outside air with high accuracy.

A carbon dioxide concentration measuring device according to the invention measures the carbon dioxide concentration in outside air through the use of a phenomenon in which infrared rays are absorbed by carbon dioxide, and comprises a power generating means which generates electric power through the use of combustion heat; a first infrared ray intensity detecting means which operates through the use of electrical energy generated by the power generating means, and detects the intensity of infrared rays emitted from an infrared source; and a computing means which operates through the use of the electrical energy generated by the power generating means, and computes the carbon dioxide concentration at least on the basis of the result of detection by the first infrared ray intensity means.

A method of measuring carbon dioxide concentration according to the invention is a method of measuring the carbon dioxide concentration in outside air through the use of a phenomenon in which infrared rays are absorbed by carbon dioxide, wherein while electric power is generated through the use of combustion heat, the intensity of infrared rays which are emitted from an infrared source is detected, and the carbon dioxide concentration is computed on the basis of the result of detection of the intensity of the infrared rays.

In the carbon dioxide concentration measuring device or the method of measuring carbon dioxide concentration according to the invention, when the carbon dioxide concentration in outside air is measured through the use of a phenomenon in which infrared rays are absorbed by carbon dioxide, electrical energy is generated through the use of combustion heat, so a process of measuring the carbon dioxide concentration (a process of detecting the intensity of infrared rays and a process of computing the carbon dioxide concentration) is executed while using the electrical energy. In this case, unlike the case where the process of measuring the carbon dioxide concentration is executed through the use of a consumable power source such as a dry cell, as long as electrical energy is generated, the emission intensity of infrared rays does not change with time, or a computing process by an arithmetic circuit is not impeded, so an error due to a change in the emission intensity of infrared rays or the impediment to the computing process by the arithmetic circuit is not easily included, and as a result, the accuracy of measurement of carbon dioxide concentration is improved.

A burning appliance according to the invention has a function of measuring the carbon dioxide concentration in outside air through the use of a phenomenon in which infrared rays are absorbed by carbon dioxide, and the burning appliance comprises: a combustion heat generator which generates combustion heat; a power generating means which generates electric power through the use of the combustion heat; an infrared ray intensity detecting means which operates through the use of electrical energy generated by the power generating means, and detects the intensity of infrared rays emitted from an infrared source; and a computing means which operates through the use of electrical energy generated by the power generating means, and computes the carbon dioxide concentration on the basis of the result of detection by the infrared ray intensity detecting means.

In the burning appliance according to the invention, when the carbon dioxide concentration in outside air is measured through the use of a phenomenon in which infrared rays are absorbed by carbon dioxide, a process of measuring carbon dioxide concentration is executed while using electrical energy generated through the use of combustion heat generated by a combustion heat generator, so as described above, an error is not easily included in the result of measurement of carbon dioxide concentration, and as a result, the accuracy of measurement of carbon dioxide concentration is improved. In addition, "outside air" means air around the burning appliance, that is, air in a room where the burning appliance is used.

In the carbon dioxide concentration measuring device or the method of measuring carbon dioxide concentration according to the invention, when the carbon dioxide concentration in outside air is measured through the use of the phenomenon in which infrared rays are absorbed by carbon dioxide, a process of measuring the carbon dioxide concentration is executed while using electrical energy generated through the use of combustion heat, so an error is not easily included in the result of measurement of carbon dioxide concentration, and as a result, the accuracy of measurement of carbon dioxide concentration is improved. Therefore, the carbon dioxide concentration in outside air can be measured with high accuracy. Thereby, a burning appliance which can measure the carbon dioxide concentration in outside air with high accuracy through the use of the carbon dioxide concentration measuring device or the method of measuring carbon dioxide concentration can be achieved.

Moreover, in the burning appliance according to the invention, when the carbon dioxide concentration in outside air is measured through the use of the phenomenon in which infrared rays are absorbed by carbon dioxide, a process of measuring the carbon dioxide concentration is executed while using electrical energy generated through the use of combustion heat generated in a combustion heat generator, so the accuracy of measurement of carbon dioxide concentration is improved. Therefore, the burning appliance can have a function of measuring the carbon dioxide concentration in outside air, and can measure the carbon dioxide concentration in outside air with high accuracy.

Other and further objects, features and advantages of the invention will appear more fully from the following description.

### BRIEF DESCRIPTION OF THE DRAWINGS

FIG. 1 is a schematic external view of a heating appliance as a burning appliance according to a first embodiment of the invention;
FIG. 2 is a schematic sectional view of the heating appliance shown in FIG. 1;
FIG. 3 is an enlarged sectional view of a main part of the heating appliance shown in FIG. 1;
FIG. 4 is a block diagram of a heating appliance;
FIG. 5 is a sectional view of a first modification of the structure of a carbon dioxide sensor;
FIG. 6 is a sectional view of a second modification of the structure of the carbon dioxide sensor;
FIG. 7 is a sectional view of a third modification of the structure of the carbon dioxide sensor;
FIG. 8 is a sectional view of a fourth modification of the structure of the carbon dioxide sensor;
FIG. 9 is a sectional view of a fifth modification of the structure of the carbon dioxide sensor;
FIG. 10 is a sectional view of a sixth modification of the structure of the carbon dioxide sensor;
FIG. 11 is a sectional view of a seventh modification of the structure of the carbon dioxide sensor;
FIG. 12 is a sectional view of an eighth modification of the structure of the carbon dioxide sensor;
FIG. 13 is a sectional view of a ninth modification of the structure of the carbon dioxide sensor; and
FIG. 14 is a schematic sectional view of a heating appliance as a burning appliance according to a second embodiment of the invention.

### DETAILED DESCRIPTION OF THE PREFERRED EMBODIMENTS

Preferred embodiments will be described in detail below referring to the accompanying drawings.

### [First Embodiment]

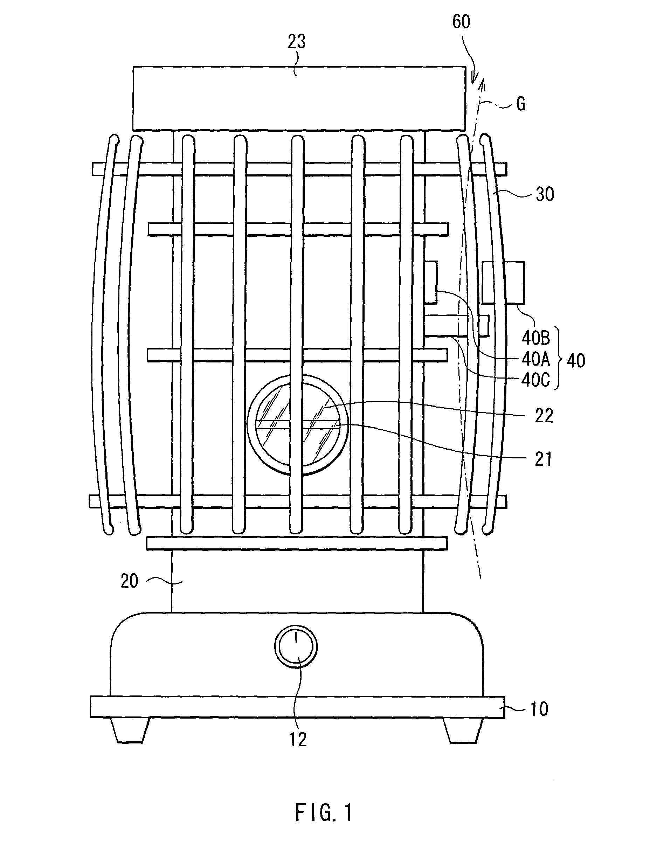

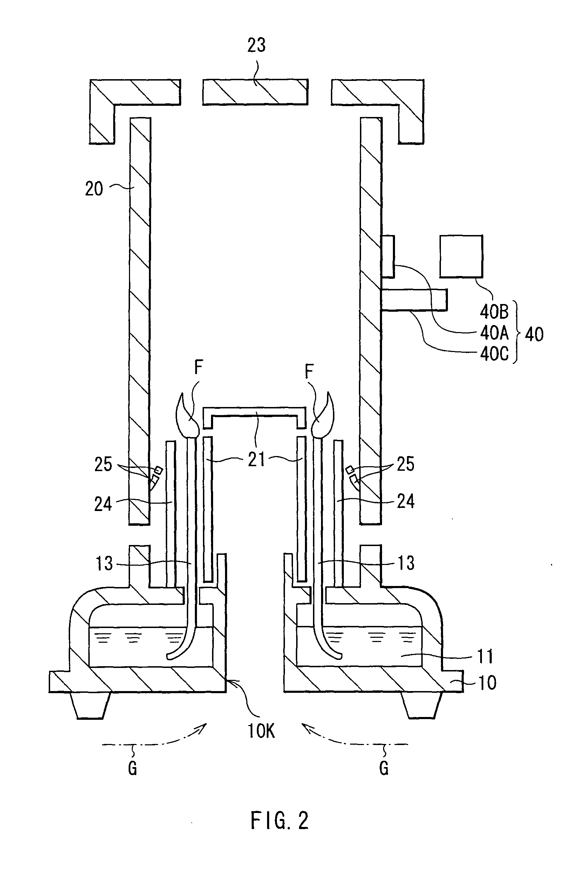

At first, referring to FIGs. 1 and 2, the structure of a heating appliance as a burning appliance according to a first embodiment of the invention will be described below. FIG. 1 shows a schematic external view of the heating appliance, and FIG. 2 shows a schematic sectional view of the heating appliance shown in FIG. 1. As "a carbon dioxide concentration measuring device" according to the invention is mounted in the heating appliance, and "a method of measuring carbon dioxide concentration" according to the invention is implemented on the basis of the operation of the heating appliance, "a carbon dioxide concentration measuring device" and "a method of measuring carbon dioxide concentration" will be also described below.

The heating appliance according to the embodiment has a function of measuring the carbon dioxide concentration in outside air G, more specifically a function of measuring the carbon dioxide concentration in the outside air G through the use of a phenomenon in which infrared rays are absorbed by carbon dioxide, and specifically the heating appliance has a function of securing electrical energy for operation without using a consumable power source such as a dry cell, that is, a power generating function. The heating appliance is, for example, a portable kerosene stove, and in the heating appliance, a carbon dioxide sensor 40 is mounted in a combustion heat generator which generates combustion heat. More specifically, as shown in FIGs. 1 and 2, the heating appliance has a structure in which a guard 30 is disposed so that an external cylinder 20 disposed on a tank 10 is surrounded with the guard 30, and the carbon dioxide sensor 40 is attached to the guard 30. A top cover 23 is attached to the external cylinder 20. In the interior of the external cylinder 20, an inner flame plate 21 for stabilizing a flame F for heating, a burner basket 24 for stabilizing a flame F for heating and an outer flame plate 25 for stabilizing a flame F for heating are contained. In FIG. 2, the guard 30 is not shown. The above described "combustion heat generator" is a generic name for a part of the heating appliance except for the carbon dioxide sensor 40, that is, the kerosene stove only.

The tank 10 is a storage member for storing a fuel such as kerosene as well as a supporting member for supporting the external cylinder 20. In the tank 10, an inlet 10K for introducing, for example, outside air G as an oxygen source used for a combustion reaction is disposed on a bottom surface, and a dial knob 12 used for manually adjusting the heating performance (so-called firepower) of the heating appliance is disposed on a front surface. In the heating appliance, for example, an end of a wick 13 is immersed in the fuel 11 stored in the tank 10, and the other end of the wick 13 extends near the inner flame plate 21, so the fuel 11 vaporized through the use of the wick 13 is ignited to generate the flame F. In the tank 10, for example, a filler opening, an oil meter (both not shown) or the like is disposed.

The external cylinder 20 is a cylindrical exterior member for containing the inner flame plate 21, the burner basket 24 and the outer flame plate 25 as well as a heated member which is heated by combustion heat. The external cylinder 20 includes, for example, a window 22 for allowing the user of the heating appliance to visually check the combustion state of the heating appliance. In the external cylinder 20, for example, an internal cylinder, an inner flame plate holding member (both not shown) or the like is contained. The inner flame plate 21 contained in the external cylinder 20 is a combustion stabilizing member which stabilizes the combustion state of the heating appliance as described above through stably maintaining an airflow to stabilize the flame F, as well as a heated member which is heated by combustion heat.

The guard 30 is a protective member for preventing the user of the heating appliance from accidentally touching the external cylinder 20. The guard 30 has, for example, a substantially netted structure in which a plurality of linear members extending toward an extending direction of the external cylinder 20 are fixed by two ring-shaped members disposed in positions near both ends of the linear members.

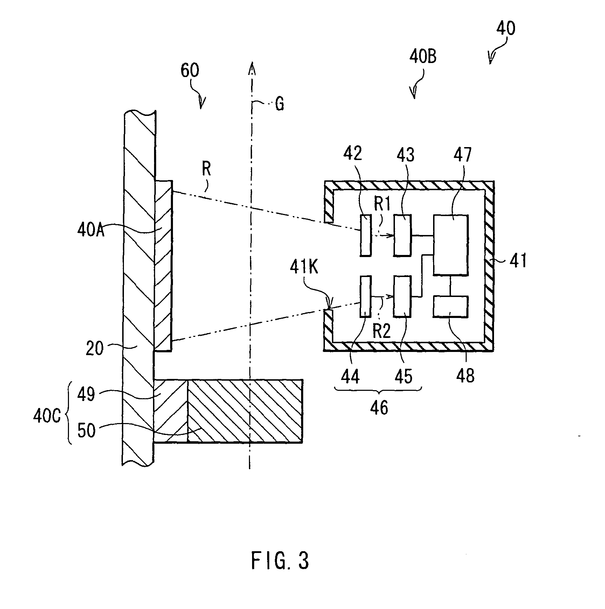

The carbon dioxide sensor 40 is a carbon dioxide concentration measuring device which is used to measure the carbon dioxide concentration in outside air G including carbon dioxide, that is, air around the heating appliance (air in a room where the heating appliance is used). For example, the carbon dioxide sensor 40 measures the carbon dioxide concentration through the use of infrared rays which are emitted from an infrared source through being heated by combustion heat from the flame F for heating, and more specifically, the carbon dioxide sensor 40 uses infrared rays emitted from an infrared ray emitting plate 40A (refer to FIG. 3), which will be described later, through being heated by combustion heat in order to measure the carbon dioxide concentration. Specifically, the carbon dioxide sensor 40 has the above-described power generating function. The carbon dioxide sensor 40 is supported, for example, through being attached to the guard 30, and the carbon dioxide sensor 40 is freely detachable if necessary.

Next, referring to FIGs. 1 through 3, the structure of a main part of the heating appliance will be described below. FIG. 3 shows an enlarged sectional view of the carbon dioxide sensor 40 shown in FIGs. 1 and 2 and its surroundings. In FIG. 3, for the sake of simplification, only the external cylinder 20 and the carbon dioxide sensor 40 are shown, and other components such as the inner flame plate 21 and the guard 30 are not shown.

As shown in FIGs. 1 through 3, the carbon dioxide sensor 40 includes, for example, the infrared ray emitting plate 40A as an infrared source which emits infrared rays R without using electrical energy through being heated by combustion heat, more specifically combustion heat from the flame F for heating generated in the heating appliance, a measuring unit 40B which measures the carbon dioxide concentration through detecting the infrared rays R emitted from the infrared ray emitting plate 40A, and a generator 40C which generates electric power through the use of combustion heat. An outside air flow path 60 for allowing the outside air G to pass therethrough is disposed between the infrared ray emitting plate 40A and the measuring unit 40B, and the outside air G is introduced into the outside air flow path 60 through the use of, for example, natural convection of air in the room. The width of the outside air flow path 60, that is, a space between the infrared ray emitting plate 40A and the measuring unit 40B can be freely set, for example, as long as the infrared rays R emitted from the infrared ray emitting plate 40A can be sufficiently detected by the measuring unit 40B. A method of introducing the outside air G into the outside air flow path 60 is not necessarily limited to the natural convection of air, and, for example, in the case where the heating appliance has a system for drawing and exhausting air, the outside air G may be introduced into the outside air flow path 60 naturally or mechanically (forcefully) through the use of the system for drawing and exhausting air.

The infrared ray emitting plate 40A is a plate-shaped infrared ray emitting member which is attached to, for example, an outer wall surface of the external cylinder 20. The infrared ray emitting plate 40A is bonded to the external cylinder 20 with, for example, an adhesive, and the infrared ray emitting plate 40A emits infrared rays R through being heated by the heat conduction phenomenon of combustion heat, that is, a phenomenon in which combustion heat is directly conducted to the infrared ray emitting plate 40A via the external cylinder 20. The infrared ray emitting plate 40A is made of, for example, a material which can emit infrared rays R through being heated by the combustion heat, more specifically graphite, glass (silicon oxide), metal oxide or the like. As the metal oxide, for example, an oxide of metal such as iron (Fe), manganese (Mn), zirconium (Zr), titanium (Ti), aluminum (Al), sodium (Na) or lithium (Li) is cited. As the material of the infrared ray emitting plate 40A, for example, a material having high emissivity and a known correlation between the emissivity and the wavelength of the material is preferable. More specifically, as the cubic structure of the infrared ray emitting plate 40A, for example, an uneven structure that the surface of the infrared ray emitting plate 40A is not flat is preferable. The infrared ray emitting plate 40A is not necessarily attached to the external cylinder 20, and, for example, the infrared ray emitting plate 40A may be disposed away from the external cylinder 20, and the infrared ray emitting plate 40A may be heated through the heat radiation phenomenon of combustion heat, that is, a phenomenon in which combustion heat is indirectly conducted via a space between the external cylinder 20 and the infrared ray emitting plate 40A.

The measuring unit 40B has a structure in which, for example, a filter 42 which separates the infrared rays R by wavelength, an infrared sensor 43 which detects the intensity of the infrared rays R (R1) separated by wavelength in the filter 42, a temperature sensor 46 which detects the temperature of the infrared ray emitting plate 40A, a control circuit 47 which controls the whole carbon dioxide sensor 40, and a battery 48 which stores electrical energy generated by the generator 40C are contained in a case 41. The temperature sensor 46 includes, for example, a filter 44 which separates the infrared rays R by wavelength as in the case of the filter 42 and an infrared sensor 45 which detects the intensity of infrared rays R (R2) separated by wavelength in the filter 44. In other words, all of the filter 42, the infrared sensor 43, the temperature sensor 46 (including the filter 44 and the infrared sensor 45), the control circuit 47 and the battery 48 are contained in the case 41, that is, they are unitized as the measuring unit 40B in a state where they are contained in the case 41.

The case 41 is a containing member which contains a series of devices for measuring carbon dioxide concentration including the infrared sensor 43 and the control circuit 47, and spatially separates these devices from their surroundings. More specifically, the case 41 prevents the series of devices for measuring carbon dioxide concentration including the infrared sensor 43 and the control circuit 47 from being affected by the influence of heat, light or the like from their surroundings. In this case, for example, as described above, the case 41 contains the filter 42, the temperature sensor 46 (including the filter 44 and the infrared sensor 45) and the battery 48 together with the infrared sensor 43 and the control circuit 47. In the case 41, an opening (inlet) 41K for introducing the infrared rays R emitted from the infrared ray emitting plate 40A is disposed. The above described "influence of heat" includes an influence caused by the airflow of the outside air G flowing through the outside air flow path 60, an influence caused by unnecessary infrared rays emitted from an object (for example, the external cylinder 20) other than the infrared ray emitting plate 40A, and the like. Moreover, "the influence of light" includes, for example, an influence caused by the light of the flame F, an influence caused by lighting in a room where the heating appliance is used, and the like. As the material of the case 41, for example, a material with low thermal conductivity and low light transmission is preferable. More specifically, for example, in order to reflect the above-described unnecessary infrared rays, a coating process such as gold plating may be carried out on the surface of the case 41. Moreover, for example, a heat sink system or a radiator system may be disposed on the case 41 so as to prevent an increase in the temperature of the case 41 by heating the case 41.

The filter 42 is an optical filter (a first optical filter) separating the infrared rays R, which are emitted from the infrared ray emitting plate 40A and are introduced into the measuring unit 40B via the outside air flow path 60, by wavelength to select infrared rays in a wavelength range W1 (a first wavelength range) from the infrared rays R, that is, an optical filter selectively allowing infrared rays R1 in the wavelength range W1 in the infrared rays R to pass therethrough, and thereby introducing the infrared rays R1 into the infrared sensor 43. The filter 42 is, for example, a bandpass filter having a property of absorbing infrared rays in a wavelength range except for the wavelength range W1. The above-described wavelength range W1 is a wavelength range including a wavelength which is easily absorbed by carbon dioxide in the whole wavelength range of the infrared rays R, and the wavelength range W1 is, for example, a wavelength range including a wavelength of either 4.26 µ m or 4.43 µ m. Both of the wavelength range including a wavelength of 4.26 µ m and the wavelength range including a wavelength of 4.43 µ m can be used; however, for example, when the rate of infrared rays absorbed by carbon dioxide is compared between the two wavelength ranges, the rate of infrared rays absorbed by carbon dioxide is higher in the wavelength range including a wavelength of 4.26 µ m than the wavelength range including a wavelength of 4.43 µ m, so in general, in the case where the carbon dioxide concentration is low (for example, 1% or less), the wavelength range including a wavelength of 4.26 µ m is preferably used, and in the case where the carbon dioxide concentration is high (for example, 10% or more), the wavelength range including a wavelength of 4.43 µ m is preferably used.

The infrared sensor 43 is an infrared ray intensity detecting means (a first infrared ray intensity detecting means) for detecting the intensity of the infrared rays R, and more specifically the infrared sensor 43 detects the intensity of the infrared rays R1 in the wavelength range W1 which is separated by wavelength in the filter 42. The infrared sensor 43 includes, for example, a thermoelectromotive force type device such as a thermopile, a pyroelectric device such as PZT (lead zirconate titanate) or a photoconducting device such as a lead selenide (PbSe) cell.

The temperature sensor 46 is a temperature detecting means (a first temperature detecting means) for detecting the temperature of the infrared ray emitting plate 40A through detecting the intensity of the infrared rays R. The filter 44 is an optical filter (a second optical filter) separating the infrared rays R, which are emitted from the infrared ray emitting plate 40A and are introduced into the measuring unit 40B via the outside air flow path 60, by wavelength to select infrared rays in a wavelength range W2 (a second wavelength range; W2≠W1), which is different from the above-described wavelength range W1, from the infrared rays R, that is, an optical filter selectively allowing infrared rays R2 in the wavelength range W2 in the infrared rays R to pass therethrough, and thereby introducing the infrared rays R2 into the infrared sensor 45. The filter 44 is, for example, a bandpass filter having a property of absorbing the infrared rays in a wavelength range except for the wavelength range W2, and more specifically a lowpass filter having a property of transmitting infrared rays in a wavelength range of 5.50 µ m or more. The above-described wavelength range W2 is a wavelength range including a wavelength which is not easily absorbed by carbon dioxide in the whole wavelength range of the infrared rays R. Specifically, as the wavelength range W2, for example, as described above, a wavelength range including a wavelength which is not easily absorbed not only by carbon dioxide but also by other absorbing sources (for example, water in outside air) except for carbon dioxide is preferable, and an example of the wavelength range W2 is a wavelength range including a wavelength of 3.00 µ m. The wavelength range W2 is not necessarily limited to a wavelength range including a wavelength of 3.00 µ m, and can be freely set within a wavelength range which does not overlap with the wavelength range W1.

The infrared sensor 45 is an infrared ray intensity detecting means (a second infrared ray intensity detecting means) used for detecting the temperature of the infrared ray emitting plate 40A through detecting the intensity of the infrared rays R, and more specifically, the infrared sensor 45 detects the intensity of the infrared rays R2 in the wavelength range W2 which is separated by wavelength in the filter 44. The infrared sensor 45 includes, for example, a thermoelectromotive force type device such as a thermopile.

The control circuit 47 controls the whole carbon dioxide sensor 40, and specifically the control circuit 47 is a computing means (an arithmetic circuit) for computing the carbon dioxide concentration at least on the basis of the result of detection by the infrared sensor 43. The control circuit 47 computes the carbon dioxide concentration, for example, on the basis of the result of detection by the infrared sensor 43 as well as the result of detection by the temperature sensor 46 (the infrared sensor 45). In particular, the control circuit 47 can operate through the use of electrical energy generated by the generator 40C, more specifically through the use of electrical energy stored in the battery 48. Further, in addition to the control circuit 47, the infrared sensor 43 and the temperature sensor 46 (the infrared sensor 45) can operate through the use of electrical energy generated by the generator 40C.

The battery 48 is a storing means for storing electrical energy generated by the generator 40C so that the carbon dioxide sensor 40 can continuously operate without using a consumable power source such as a dry cell. The battery 48 is, for example, a storage device such as a secondary battery or an electric double layer capacitor.

The generator 40C is a power generating means for generating electric power through the use of combustion heat, more specifically combustion heat from the flame F for heating generated in the heating appliance. For example, the generator 40C directly converts the heat energy of combustion heat into electrical energy, and more specifically the generator 40C includes a power generating device 49 attached to the outer wall surface of the external cylinder 20 and a radiating system 50 attached to the power generating device 49 so as to be disposed opposite to the external cylinder 20 with the power generating device 49 in between. The generator 40C includes, for example, an electric control device such as a DC (Direct Current)-DC converter or the like in addition to the power generating device 49 and the radiating system 50, and the generator 40C is connected to the control circuit 47 through wiring (not shown).

The power generating device 49 actually converts heat energy into electrical energy through being heated by combustion heat from the flame F. The power generating device 49 includes, for example, a thermoelectric device, and mainly has a structure in which an n-type semiconductor and a p-type semiconductor which can generate electric power through the use of a temperature difference are alternately connected in series with an electrode in between. As the n-type semiconductor and the p-type semiconductor constituting the power generating device 49, for example, various semiconductors can be used according to an operating temperature (a temperature heated by combustion heat), and more specifically, under the condition of 250°C or less, bismuth telluride (Bi₂Te₃) or the like is used, and under the condition of 1000°C or less, silicon germanium (Si₁₋ₓGeₓ), iron silicide (FeSi₂) or the like can be used. In order to secure the power generating performance of the power generating device 49, for example, 50 or more combinations of the n-type semiconductors and the p-type semiconductors are preferably connected in series. The power generating device 49 may includes, for example, a thermo photo voltaic (TPV) device instead of the thermoelectric device.

In order to generate electric power through the use of a temperature difference in the power generating device 49 (the n-type semiconductor and the p-type semiconductor), the radiating system 50 generates a temperature difference in the power generating device 49 through partially radiating (that is, cooling) an end of the power generating device 49, more specifically an end of the power generating device 49 on a side away from the external cylinder 20. The radiating system 50 includes, for example, a radiating member such as a cooling fin. The radiating system 50 may include a heat pipe, a vapor chamber, a water-cooling system in which cooling water circulates, or the like instead of the cooling fin.

The power generation principle of the generator 40C will be briefly described below. During the operation of the heating appliance, the power generating device 49 is heated by combustion heat from the flame F through the external cylinder 20, so the temperature of the whole power generating device 49 increases; however, the power generating device 49 is partially cooled by the radiating effect of the radiating system 50. As a result, in the power generating device 49, a temperature difference occurs between a side closer to the external cylinder 20 and a side away from the external cylinder 20 (a side closer to the radiating system 50). When a temperature difference occurs in the power generating device 49, carriers move from a high temperature side to a low temperature side in the n-type semiconductor and the p-type semiconductor, so a potential difference in a direction opposite to the temperature difference occurs in the n-type semiconductor and the p-type semiconductor. Therefore, the generator 40C generates electric power through the use of the potential difference.

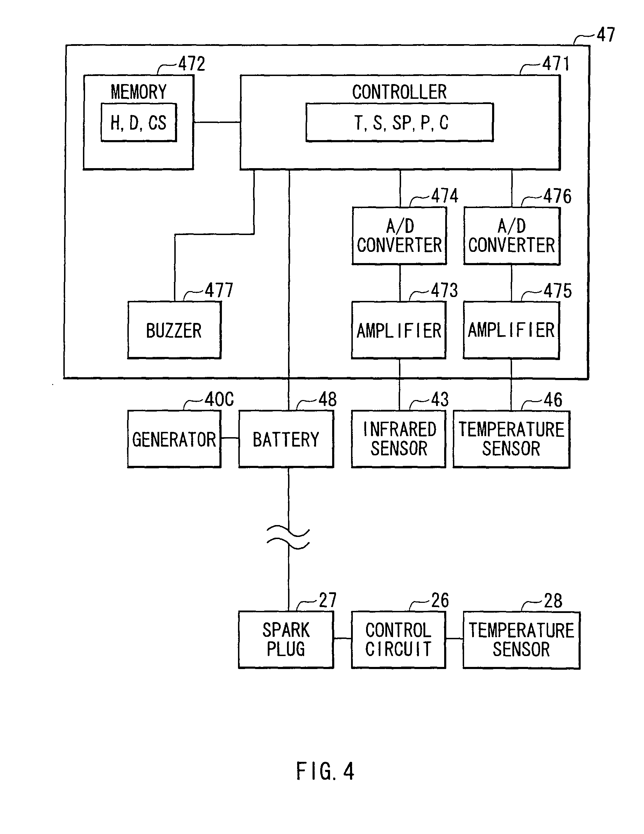

Next, referring to FIGs. 1 through 4, the detailed structure of the heating appliance will be described below. FIG. 4 shows a block diagram of the heating appliance. FIG. 4 shows the generator 40C, the infrared sensor 43, the temperature sensor 46 and the battery 48 which are shown in FIG. 3 in addition to a series of components described below.

The control circuit 47 constituting the carbon dioxide sensor 40 in the heating appliance includes, for example, a controller 471 which is a main controlling body of the control circuit 47, a memory 472 for storing various information, an amplifier 473 which amplifies an output signal from the infrared sensor 43, an analog/digital (A/D) converter 474 which converts the output signal from the infrared sensor 43 from an analog signal to a digital signal, an amplifier 475 which amplifies an output signal from the temperature sensor 46, an A/D converter 476 which converts the output signal from the temperature sensor 46 from an analog signal to a digital signal, and a buzzer 477 which emits a warning beep as shown in FIG. 4.

The controller 471 reads out data from the memory 472 if necessary so as to compute carbon dioxide concentration C on the basis of the data and the result of detection by the infrared sensor 43, and the controller 471 includes, for example, a control device such as a CPU (Central Processing Unit). For example, as described above, the controller 471 computes the carbon dioxide concentration C on the basis of the result of detection by the infrared sensor 43 and the result of detection by the temperature sensor 46, and more specifically, the controller 471 computes the emission intensity SP of the infrared rays R emitted from the infrared ray emitting plate 40A on the basis of the temperature T of the infrared ray emitting plate 40A detected by the temperature sensor 46 so as to compute the carbon dioxide concentration C on the basis of the emission intensity SP of the infrared rays R. In particular, when the controller 471 computes, for example, the carbon dioxide concentration C, the controller 471 makes a comparison between a reference value for evaluating the carbon dioxide concentration C (reference concentration CS; for example, CS=1%) and the carbon dioxide concentration C, and then when the carbon dioxide concentration C is equal to or higher than the reference concentration CS, the controller 471 activates the buzzer 477.

The memory 472 stores necessary data for computing the carbon dioxide concentration C, and the memory 472 is, for example, a storage device such as a register, a RAM (Random Access Memory), a ROM (Read Only Memory) or an EEPROM (Electrically Erasable Programmable Read Only Memory). The memory 472 stores, for example, the above-described reference concentration CS, emissivity H of the infrared ray emitting plate 40A which is necessary to compute the emission intensity SP of the infrared rays R through the use of Planck's formula, table data D which shows a correlation between the rate P of absorbed infrared rays R1 and the carbon dioxide concentration C as constants in advance.

The buzzer 477 is activated on the basis of an actuating signal outputted from the controller 471, and emits a warning beep if necessary.

The heating appliance includes not only the above-described series of components but also a control circuit 26 which controls the combustion state of the heating appliance, a spark plug 27 for ignition, and a temperature sensor 28 which detects the temperature of the outside air G.

The control circuit 26 automatically controls the combustion state of the heating appliance, that is, the control circuit 26 is a firepower adjusting means for automatically adjusting the firepower of the heating appliance. The control circuit 26 keeps track of the ambient temperature in a room where the heating appliance is placed, for example, on the basis of the result of detection by the temperature sensor 28, that is, the temperature of the outside air G detected by the temperature sensor 28, thereby the control circuit 26 adjusts the firepower of the flame F (refer to FIG. 2) while adjusting the supplied amount of the fuel 11 (refer to FIG. 2) on the basis of the set temperature set by the user. The control circuit 26 includes, for example, an amplifier, an A/D converter (both not shown) or the like for processing an output signal from the temperature sensor 28 as in the case of the control circuit 47 of the carbon dioxide sensor 40.

The spark plug 27 is an ignition means for producing the flame F through the use of electrical energy generated by the generator 40C, more specifically through the use of electrical energy stored in the battery 48.

The temperature sensor 28 is an outside air temperature detecting means for detecting the temperature of the outside air G which is necessary for the control circuit 26 to control the combustion state of the heat appliance, and the temperature sensor 28 is, for example, a typical thermometer for detecting room temperature. The position of the temperature sensor 28 can be freely set.

Next, referring to FIGs. 1 through 4, the operation of the heating appliance will be described below. The computation of the carbon dioxide concentration C will be mainly described below. The method of measuring carbon dioxide concentration according to the invention can be achieved on the basis of the operation of the heating appliance which is described below.

In the heating appliance, the following optical principle is established between the infrared ray emitting plate 40A and the measuring unit 40B (including the filter 42, the infrared sensor 43 and the temperature sensor 46 (including the filter 44 and the infrared sensor 45)) in the carbon dioxide sensor 40. In other words, when the vaporized fuel 11 is ignited through the use of the wick 13 to produce the flame F, and combustion heat is generated by the flame F, the external cylinder 20 is heated by the combustion heat, that is, the infrared ray emitting plate 40A is heated through conducting the combustion heat via the external cylinder 20, so the infrared rays R are emitted from the infrared ray emitting plate 40A to the measuring unit 40B. When the infrared rays R emitted from the infrared ray emitting plate 40A are introduced into the measuring unit 40B through the outside air flow path 60, that is, the infrared rays R are introduced into the filter 42 in the case 41 through the inlet 41K, the infrared rays R are separated by wavelength in the filter 42, so the infrared rays R1 in the wavelength range W1 in the infrared rays R are selectively introduced into the infrared sensor 43. Thereby, the intensity (detection intensity) S of the infrared rays R1 is detected by the infrared sensor 43. On the other hand, when the infrared rays R emitted from the infrared ray emitting plate 40A is introduced into the filter 44 in the case 41 through the inlet 41K, the infrared rays R are separated by wavelength in the filter 44, so the infrared rays R2 in the wavelength range W2 in the infrared rays R are selectively introduced into to the infrared sensor 45. Thereby the intensity of the infrared rays R2 is detected by the infrared sensor 45, so the temperature T of the infrared ray emitting plate 40A is detected by the temperature sensor 46 on the basis of the intensity of the infrared rays R2.

The controller 471 of the control circuit 47 computes the carbon dioxide concentration C in the outside air G through the following procedures. At first, when the controller 471 obtains the temperature T of the infrared ray emitting plate 40A detected in the temperature sensor 46 (the infrared sensor 45), the controller 471 read the emissivity H of the infrared ray emitting plate 40A from the memory 472 to compute the emission intensity SP of the infrared rays R1 on the basis of the temperature T and the emissivity H through the use of Planck's formula. The "emission intensity SP" means the intensity (initial intensity) of the infrared rays R1 just after being emitted from the infrared ray emitting plate 40A, that is, the intensity (the maximum intensity) of the infrared rays R1 before being absorbed by carbon dioxide. Next, on the basis of the detection intensity S of the infrared rays R1 detected by the infrared sensor 43 and the computed emission intensity SP, the rate of decrease in the detection intensity S to the emission intensity SP, that is, the rate P of infrared rays R1 absorbed by carbon dioxide is computed. Finally, the table data D is read out from the memory 472, and the carbon dioxide concentration C corresponding to the rate P of infrared rays absorbed by carbon dioxide is specified referring to the table data D. Thereby, the carbon dioxide concentration C in the outside air G is computed on the basis of the result of detection by the infrared sensor 43 and the result of detection by the temperature sensor 46 (the infrared sensor 45).

The controller 471 which computes the carbon dioxide concentration C reads out the reference concentration CS from the memory 472 to compare the carbon dioxide concentration C with the reference concentration CS, and when the carbon dioxide concentration C is equal to or higher than the reference concentration CS (C ≧ CS), the controller 471 activates the buzzer 477. Thereby, the buzzer 477 emits a warning beep, and when the user hears the warning beep as a signal, the user stops the heating appliance.

The heating appliance operates through the use of electrical energy generated on the basis of a power generation function. In other words, when combustion heat is generated through producing the flame F according to the operation of the heating appliance, the generator 40C is heated by the combustion heat through the external cylinder 20, so the generator 40C generates electric power on the basis of the above-described power generation principle to generate electrical energy, and the electrical energy is stored in the battery 48. The infrared sensor 43, the temperature sensor 46 (the infrared sensor 45) and the like together with control circuit 47 operate through the use of the electrical energy stored in the battery 48.

The heating appliance according to the embodiment includes the generator 40C which generates electric power through the use of the combustion heat, more specifically through directly converting the heat energy of the combustion heat from the flame F for heating into electrical energy, so the carbon dioxide sensor 40 (including the infrared sensor 43 and the control circuit 47) operates through the use of the electrical energy generated by the generator 40C. In this case, unlike the carbon dioxide concentration measuring system described in "Description of the Related Art", that is, unlike the case where the carbon dioxide sensor operates through the use of a consumable power source such as a dry cell, as long as the generator 40C generates electrical energy, the emission intensity of the infrared rays R does not change with time, and a computing process by the control circuit 47 (the controller 471) is not impeded. Therefore, an error due to a change in the emission intensity of the infrared rays R or the impediment to the computing process by the control circuit 47 is not easily included in the result of measurement of the carbon dioxide concentration C, thereby the accuracy of measurement of the carbon dioxide concentration C is improved. Consequently, in the embodiment, a function of measuring the carbon dioxide concentration C in the outside air G is included, and the carbon dioxide concentration C in the outside air G can be measured with high accuracy.

In the embodiment, in the carbon dioxide sensor 40 which measures the carbon dioxide concentration C in the outside air G through the use of the phenomenon in which the infrared rays R are absorbed by the carbon dioxide, the infrared rays R are emitted from the infrared ray emitting plate 40A through the use of combustion heat from the flame F for heating, and the carbon dioxide concentration C is computed on the basis of the result of detection of the intensity of the infrared rays R (a change in the intensity of the infrared rays R1), so the heat energy of the combustion heat is used as energy for generating the infrared rays to emit the infrared rays R from the infrared ray emitting plate 40A, that is, the infrared rays R is emitted through the use of a non-power consumption type infrared source (the infrared ray emitting plate 40A) which converts heat energy into light energy. In this case, unlike the case where a power consumption type infrared source (for example, a light source such as a filament bulb) which converts electrical energy into light energy is used, the emission intensity of the infrared rays R is resistant to changing with time, for example, because of a factor responsible for an electrical change such as the consumption of a dry cell. Thereby, as long as the heat energy of the combustion heat is maintained, the emission intensity of the infrared rays R is stabilized, and an error because of the above-described factor for the electrical change is not easily included in the carbon dioxide concentration C, so the accuracy of measurement of the carbon dioxide concentration C is improved. Consequently, in this view, the carbon dioxide concentration C in the outside air G can be measured with high accuracy.

In the embodiment, the filter 42 which separates the infrared rays R emitted from the infrared ray emitting plate 40A by wavelength to select the infrared rays R1 in the wavelength range W1 is included, and the infrared rays R1 in the wavelength range W1 in the infrared rays R is selectively introduced into the infrared sensor 43 through the use of a wavelength separating effect of the filter 42, so in the infrared sensor 43, the infrared rays R1 in the wavelength range W1 which is necessary to measure the carbon dioxide concentration C is selectively detected. Therefore, in the infrared sensor 43, the intensity of the infrared rays R1 can be detected stably and easily.

In this case, as described above, specifically the carbon dioxide concentration C is computed on the basis of the intensity of the infrared rays R1 in the wavelength range W1 which is necessary to measure the carbon dioxide concentration C, that is, the specific wavelength range W1 with a high property of being absorbed by the carbon dioxide, so compared to the case where the carbon dioxide concentration C is computed on the basis of the intensity of infrared rays in a wavelength range with a low property of being absorbed by carbon dioxide, the detection sensitivity of the infrared rays R1 on the basis of the property of being absorbed by carbon dioxide is improved. Therefore, the carbon dioxide concentration C can be measured with higher accuracy.

In the embodiment, the infrared sensor 43 is contained in the case 41 so as to spatially separate the infrared sensor 43 from its surroundings, so the infrared sensor 43 does not easily have the influence of heat or light from its surroundings because of the presence of the case 41. In this case, compared to the case where the infrared sensor 43 is not contained in the case 41 so as to be exposed, an error due to the above-described influence of heat or light is not easily included in the result of detection by the infrared sensor 43, so the detection accuracy of the infrared sensor 43 is improved. Therefore, in the infrared sensor 43, the intensity of the infrared rays R1 can be detected with high accuracy. In this case, for example, as described above, when a coating process for reflecting unnecessary infrared rays is carried out on the case 41, or when a heat sink system or a radiator system for preventing an increase in temperature is disposed in the case 41, the detection accuracy of the infrared sensor 43 can be further improved. The temperature sensor 46 (the infrared sensor 45) contained in the case 41 together with the infrared sensor 43 can have the same effect as that of the infrared sensor 43 which is described above, so the temperature sensor 46 (the infrared sensor 45) can detect the temperature T of the infrared ray emitting plate 40A with high accuracy.

In the embodiment, since the temperature sensor 46 (the infrared sensor 45) which detects the temperature T of the infrared ray emitting plate 40A is included, and the controller 471 of the control circuit 47 computes the carbon dioxide concentration C on the basis of the result of detection by the infrared sensor 43 (the detection intensity S of the infrared rays R1) and the result of detection by the temperature sensor 46 (the infrared sensor 45) (the temperature T of the infrared ray emitting plate 40A), as described above, in a process of computing the carbon dioxide concentration C, the emission intensity SP of the infrared rays R is specified on the basis of the temperature T of the infrared sensor 43 through the use of Planck's formula. In this case, unlike the case where the carbon dioxide concentration C is computed on the basis of only the result of detection by the infrared sensor 43 without the result of detection by the temperature sensor 46 (the infrared sensor 45), that is, unlike the case where the carbon dioxide concentration C is computed through using the emission intensity SP of the infrared rays R emitted from the infrared ray emitting plate 40A as an unchanging constant, even if the emission intensity SP of the infrared rays R changes, for example, because of a change in the heating performance (so-called firepower) or the like, the carbon dioxide concentration C is computed in consideration of a change in the emission intensity SP, so the accuracy of measurement of the carbon dioxide concentration C is further improved. Therefore, the carbon dioxide concentration C can be measured with higher accuracy.

In this case, in particular, the temperature sensor 46 includes the filter 44 which separates the infrared rays R emitted from the infrared ray emitting plate 40A by wavelength to select the infrared rays R2 in the wavelength range W2 which is different from the wavelength range W1, and the infrared rays R2 in the wavelength range W2 in the infrared rays R is selectively introduced into the infrared sensor 45 through the use of the wavelength separating effect of the filter 44, so the infrared sensor 45 selectively detects the infrared rays R2 in the wavelength range W2 except for the wavelength range W1 which are necessary to measure the carbon dioxide concentration C. Therefore, the temperature T of the infrared ray emitting plate 40A is detected on the basis of the infrared rays R2 in the wavelength range W2 with a low property of being absorbed by the carbon dioxide, so when the temperature T of the infrared ray emitting plate 40A is detected in the temperature sensor 46 (the infrared sensor 45), the temperature sensor 46 is not easily affected by the influence of the property of being absorbed by the carbon dioxide. Consequently, the temperature sensor 46 (the infrared sensor 45) can stably and easily detect the temperature T of the infrared ray emitting plate 40A with high accuracy.

In the embodiment, as described above, as the infrared rays R is emitted from the infrared ray emitting plate 40A through the use of combustion heat from the flame F for heating, electric power is consumed only for the ignition of the heat appliance. Therefore, compared to the case where the electric power is consumed to emit the infrared rays R, the power consumption is reduced. Accordingly, for example, in the case where a dry cell is mounted as a backup power source, the exchange frequency of the dry cell is reduced according to a reduction in the power consumption, so the heat appliance can operate without replacing the battery with a new one throughout 1 season (that is, 1 winter season), that is, the convenience in using the heating appliance can be improved.

In the carbon dioxide concentration measuring device (the carbon dioxide sensor 40) or a method of measuring carbon dioxide concentration according to the embodiment, while electric power is generated through the use of combustion heat from the flame F for heating, the carbon dioxide concentration C is computed on the basis of the result of detection of the intensity of the infrared rays R, so as described above, the accuracy of measurement of the carbon dioxide concentration C is improved, and as a result, the carbon dioxide concentration C in the outside air G can be measured with high accuracy. Thereby, the heating appliance which can measure the carbon dioxide concentration C in the outside air G with high accuracy can be achieved through the use of the carbon dioxide concentration measuring device or the method of measuring carbon dioxide concentration.

In the embodiment, the carbon dioxide sensor 40 includes the infrared ray emitting plate 40A with a plate-shaped appearance as an infrared source; however, the infrared ray emitting plate 40A is not necessarily limited to this, and the appearance of the infrared source can be freely changed. More specifically, for example, the appearance of the infrared source may have a sheet shape instead of a plate shape, or a coating film applied to the surface of the external cylinder 20. In any of the cases, the same effects as those in the embodiment can be obtained.

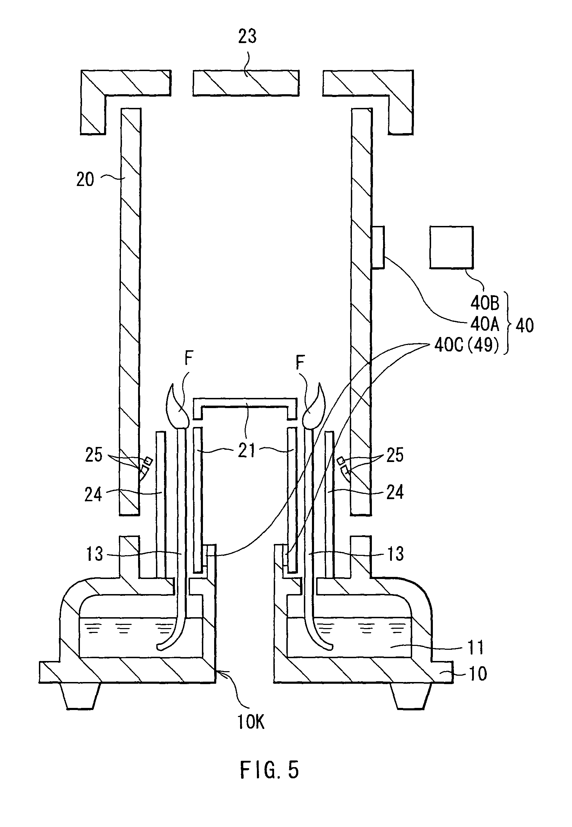

In the embodiment, as shown in FIG. 2, the carbon dioxide sensor 40 includes the generator 40C attached to the outer wall surface of the external cylinder 20 so that the generator 40C can generate electric power through being heated by combustion heat from the flame F for heating; however, the embodiment is not necessarily limited to this, and as long as the generator 40C can generate electric power through being heated as in the case where the generator 40C is attached to the outer wall surface of the external cylinder 20, the position of the generator 40C can be variously changed. More specifically, for example, as shown in FIG. 5, the carbon dioxide sensor 40 may have a structure in which the generator 40C is attached to the inner flame plate 21 instead of the external cylinder 20. In this case, for example, it is preferable that the generator 40C includes only the power generating device 49 without including the radiating system 50 (refer to FIG. 3), and the generator 40C is disposed in a gap between the inner flame plate 21 and the external cylinder 20 so that the generator 40C is supported through sandwiching the generator 40C between the inner flame plate 21 and the external cylinder 20. More specifically, the number of the generators 40C can be freely set, and in FIG. 5, for example, two generators 40C are disposed on both sides of the inlet 10K so that the inlet 10K is sandwiched between the generators 40C. In the carbon dioxide sensor 40, the generator 40C is heated through the inner flame plate 21 by the combustion heat from the flame F for heating, and the external cylinder 20 is cooled by the outside air G introduced through the inlet 10K, so a temperature difference occurs in the power generating device 49 so that electric power can be generated in the generator 40C. Accordingly, the same effects as those in the embodiment can be obtained. The carbon dioxide sensor 40 shown in FIG. 5 has the same structure as that shown in FIG. 2 except for the above-described point.

In the embodiment, as shown in FIG. 3, the carbon dioxide sensor 40 includes the infrared source (the infrared ray emitting plate 40A) which emits the infrared rays R; however, the embodiment is not necessarily limited to this, and in the case where an infrared source can be secured independently of the carbon dioxide sensor 40, the carbon dioxide sensor 40 may not include the infrared source.

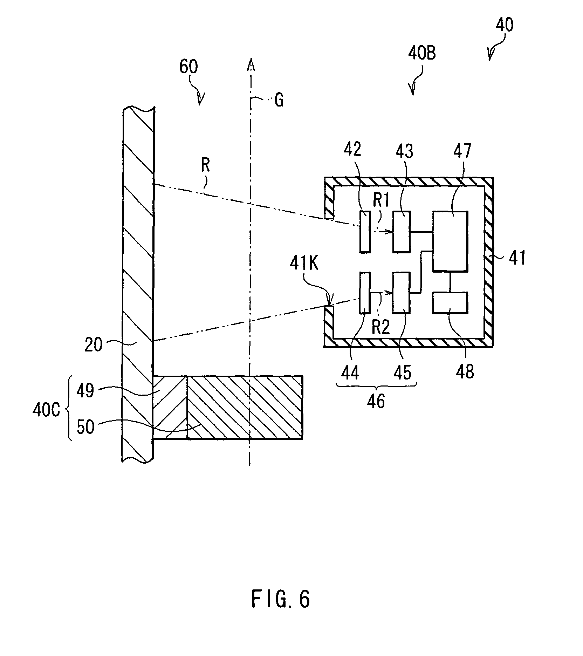

More specifically, firstly, for example, as shown in FIG. 6, in the case where the infrared rays R are emitted from the external cylinder 20 through being heated by the combustion heat from the flame F for heating, that is, the case where the external cylinder 20 can function as an infrared source, the external cylinder 20 can be used as an infrared source. In the carbon dioxide sensor 40, the carbon dioxide concentration C can be measured in the measuring unit 40B through the use of the infrared rays R emitted from the external cylinder 20, so the same effects as those in the embodiment can be obtained. The carbon dioxide sensor 40 shown in FIG. 6 has the same structure as that shown in FIG. 3 except for the above-described point.

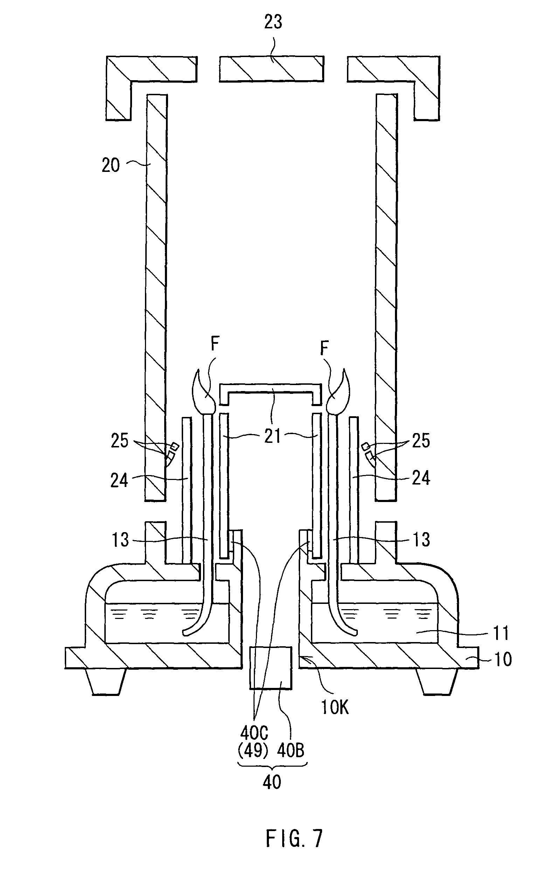

Secondly, for example, as shown in FIG. 7, in the case where infrared rays are emitted from the inner flame plate 21 through being heated by the combustion heat from the flame F for heating, that is, the case where the inner flame plate 21 can function as an infrared source, the inner flame plate 21 can be used as an infrared source. In the case where the inner flame plate 21 is used as an infrared source, for example, the measuring unit 40B is preferably disposed in the inlet 10K so that the infrared rays emitted from the inner flame plate 21 can be detected. In the carbon dioxide sensor 40, the carbon dioxide concentration C can be measured in the measuring unit 40B through the use of the infrared rays emitted from the inner flame plate 21, so the same effects as those in the embodiment can be obtained. For reference, in FIG. 7, for example, since the measuring unit 40B is disposed in the inlet 10K, as in the case shown in FIG. 5, two generators 40C (the power generating devices 49) are disposed between the inner flame plate 21 and the external cylinder 20. The carbon dioxide sensor 40 shown in FIG. 7 has the same structure as that shown in FIG. 3 except for the above-described point.

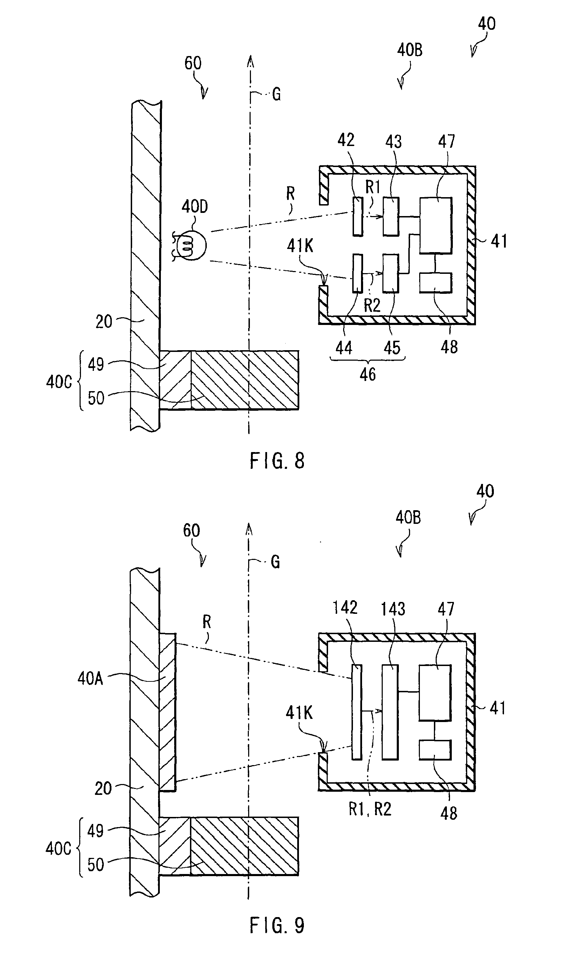

In the embodiment, as shown in FIG. 3, the carbon dioxide sensor 40 includes the infrared ray emitting plate 40A, which emits the infrared rays R without using electrical energy through being heated by the combustion heat from the flame F for heating, as an infrared source emitting the infrared rays R; however, the embodiment is not necessarily limited to this, and for example, as shown in FIG. 8, the carbon dioxide sensor 40 may include a light source 40D which emits the infrared rays R through the use of electrical energy instead of the infrared ray emitting plate 40A which emits the infrared rays R without using the electrical energy. The light source 40D operates through the use of electrical energy generated by the generator 40C as in the case of the control circuit 47, and the light source 40D is, for example, a filament bulb or the like. In the carbon dioxide sensor 40, the carbon dioxide concentration C can be measured in the measuring unit 40B through the use of the infrared rays R emitted from the light source 40D, so the same effects as those in the embodiment can be obtained. The carbon dioxide sensor 40 shown in FIG. 8 has the same structure as that shown in FIG. 3 except for the above-described point.

In the embodiment, as shown in FIG. 3, the carbon dioxide sensor 40 (the measuring unit 40B) includes two filters 42 and 44 and two infrared sensors 43 and 45 corresponding to the infrared rays R1 and R2 in order to detect the intensity of the infrared rays R1 in the wavelength range W1 and the intensity of the infrared rays R2 in the wavelength range W2 which are different from each other, thereby the intensity of the infrared rays R1 and the intensity of the infrared rays R2 are separately detected through the use of the two infrared sensors 43 and 45; however, the embodiment is not necessarily limited to this. More specifically, instead of two filters 42 and 44 and two infrared sensors 43 and 45 shown in FIG. 3, for example, as shown in FIG. 9, the carbon dioxide sensor 40 may include one filter 142 and one infrared sensor 143 so that the intensity of the infrared rays R1 and the intensity of the infrared rays R2 are detected through the use of the infrared sensor 143 collectively. The filter 142 is a tunable filter which can select a wavelength range to be separated by wavelength (a wavelength range which is selectively transmitted) from among a plurality of wavelength ranges which are different from each other if necessary. More specifically, for example, the filter 142 variably separates the infrared rays R into the infrared rays R1 in the wavelength range W1 and the infrared rays R2 in the wavelength range W2, that is, the filter 142 acts the roles of the two filters 42 and 44 described in the above embodiment. The infrared sensor 143 detects the intensity of the infrared rays R1 and the intensity of the infrared rays R2 separated by the filter 142, and the infrared sensor 143 acts the roles of the infrared sensors 43 and 45 described in the above embodiment. The infrared sensor 143 has, for example, the same structure as that of the infrared sensor 45. In the carbon dioxide sensor 40 including the filter 142 and the infrared sensor 143, when the infrared rays R are introduced in the state where the wavelength range to be separated by the filter 142 is set to the wavelength range W1, the infrared rays R1 in the wavelength range W1 in the infrared rays R are selectively introduced into the infrared sensor 143 through the use of the wavelength separation effect of the filter 142, and intensity of the infrared rays R1 is detected in the infrared sensor 143. When the infrared rays R are introduced in the state where the wavelength range to be separated by the filter 142 is switched from the wavelength range W1 to the wavelength range W2, the infrared rays R2 in the wavelength range W2 in the infrared rays R are selectively introduced into the infrared sensor 143 through the use of the wavelength separating effect of the filter 142, and the intensity of the infrared rays R2 is detected in the infrared sensor 143. Therefore, in the carbon dioxide sensor 40, the intensity of the infrared rays R1 and the intensity of the infrared rays R2 can be detected, so the same effects as those in the embodiment can be obtained. The carbon dioxide sensor 40 shown in FIG. 9 has the same structure as that shown in FIG. 3 except for the above-described point.

For reference, as shown in FIG. 9, in the case where the intensity of the infrared rays R1 and the intensity of the infrared rays R2 are collectively detected through the use of one infrared sensor 143, the carbon dioxide sensor 40 may include a turret filter system which includes two filters 42 and 44 (refer to FIG. 3) described in the above embodiment instead of the filter 142 which is the tunable filter, and can alternately switch two filters 42 and 44 so that the position of each of the filters 42 and 44 faces the infrared sensor 143 if necessary, although the carbon dioxide sensor 40 is not described in detail referring to a drawing. In this case, the intensity of the infrared rays R1 and the intensity of the infrared rays R2 can be detected in the infrared sensor 143 through the use of the wavelength separating effects of the filters 42 and 44 through switching the positions of the filters 42 and 44 by the filter system, so the same effects as those in the embodiment can be obtained.

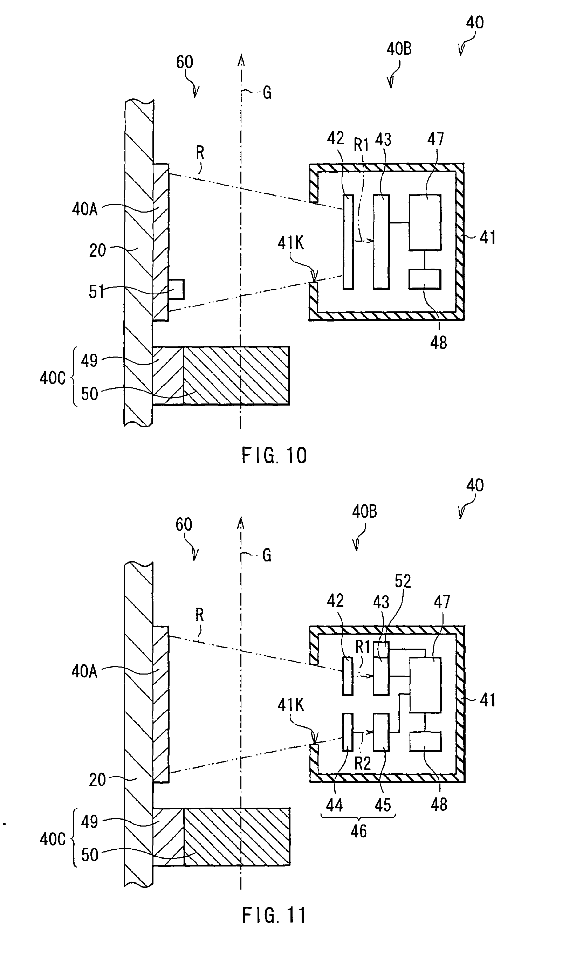

In the embodiment, as shown in FIG. 3, a sensor for temperature detection (the temperature sensor 46) is disposed away from the infrared ray emitting plate 40A, that is, the temperature T of the infrared ray emitting plate 40A is indirectly detected by a non-contact type sensor for temperature detection (the temperature sensor 46); however, the embodiment is not necessarily limited to this. More specifically, instead of the non-contact type sensor for temperature detection (the temperature sensor 46), for example, as shown in FIG. 10, the carbon dioxide sensor 40 (the measuring unit 40B) may include a contact type sensor for temperature detection (a temperature sensor 51) so that the temperature T of the infrared ray emitting plate 40A is directly detected through the use of the contact type sensor for temperature detection (the temperature sensor 51). The temperature sensor 51 is attached to, for example, the surface of the infrared ray emitting plate 40A, and more specifically the temperature sensor 51 is bonded to the infrared ray emitting plate 40A. The temperature sensor 51 includes a resistance change type device such as a thermistor or a thermoelectromotive force type device such as a thermocouple. In the case where the contact type temperature sensor 51 is used instead of the non-contact type temperature sensor 46, the temperature sensor 46 (the filter 44 and the infrared sensor 45) shown in FIG. 3 is not necessary. In the carbon dioxide sensor 40 including the temperature sensor 51, the temperature T of the infrared ray emitting plate 40A can be measured, so the same effects as those in the embodiment can be obtained. For confirmation, in FIG. 10, although wiring for connecting the temperature sensor 51 to the control circuit 47 is not shown, the wiring can be freely installed. The carbon dioxide sensor 40 shown in FIG. 10 has the same structure as that shown in FIG. 3 except for the above-described point.

In the embodiment, as shown in FIG. 4, the carbon dioxide sensor 40 includes the buzzer 477, and when the carbon dioxide concentration C is equal to or higher than the reference concentration CS, the controller 471 of the control circuit 47 activates the buzzer 477 so as to give a warning to the user; however, the embodiment is not necessarily limited to this. For example, when the carbon dioxide concentration C is equal to or higher than the reference concentration CS, the controller 471 activates the buzzer 477, and then the controller 471 may forcefully stop the heating appliance. As a system that the controller 471 forcefully stops the heating appliance, for example, an actuator may be activated by an electric signal process to move the wick 13 down (move the wick 13 away from the inner flame plate 21) and thereby to stop the combustion of the heating appliance, or a relay circuit may be used to activate an electrical fire extinguishing system. In this case, when the carbon dioxide concentration C is equal to or higher than the reference concentration CS, the heating appliance is stopped so as not to continuously generate carbon dioxide. Thereby, an excessive increase in the carbon dioxide concentration C in the outside air G can be prevented.

In the embodiment, as shown in FIG. 4, the carbon dioxide sensor 40 (the measuring unit 40B) includes the buzzer 477 as a main operating body which is activated when the carbon dioxide concentration C is equal to or higher than the reference concentration CS, and the buzzer 477 emits a warning beep to inform the user that the carbon dioxide concentration C is equal to or higher than the reference concentration CS; however, the embodiment is not necessarily limited to this, and as long as the user can be informed that the carbon dioxide concentration C is equal to or higher than the reference concentration CS, the main operating body can be freely changed. More specifically, the carbon dioxide sensor 40 may include a lamp or a display panel instead of the buzzer 477 so that when the carbon dioxide concentration C is equal to or higher than the reference concentration CS, the lamp lights up, or a warning message is shown on the display panel. For example, the lamp or the display panel is preferably attached to the surface of the case 41 so as to be easily visible to the user. In this case, the user can be informed that the carbon dioxide concentration C is equal to or higher than the reference concentration CS through the use of the light emitted when the lamp lights up or a warning message shown on the display panel. In the case where the carbon dioxide sensor 40 includes the display panel, for example, in addition to showing a warning message on the display panel as described above, the carbon dioxide concentration C may be shown on the display panel in real time.

In the embodiment, as an example for improving the accuracy of measurement of carbon dioxide concentration C, as described above, the carbon dioxide sensor 40 (the measuring unit 40B) includes the temperature sensor 46 which detects the temperature T of the infrared ray emitting plate 40A so as to compute the emission intensity SP of the infrared rays R on the basis of the temperature T of the infrared ray emitting plate 40A and then compute the carbon dioxide concentration C in consideration of the emission intensity SP; however, the embodiment is not necessarily limited to this, and as long as desired accuracy of measurement of the carbon dioxide concentration C is satisfied, the structure of the carbon dioxide sensor 40 can be freely changed.

More specifically, firstly, for example, as shown in FIG. 11, the carbon dioxide sensor 40 may further include a temperature sensor 52 which detects the temperature of the infrared sensor 43 to compute the carbon dioxide concentration C in consideration of the temperature of the infrared sensor 43 detected by the temperature sensor 52. As described above, the temperature sensor 52 is a temperature detecting means (a second temperature detecting means) for detecting the temperature of the infrared sensor 43, and has, for example, the same structure as that of the temperature sensor 51 shown in FIG. 10. In the carbon dioxide sensor 40 including the temperature sensor 52, even if the temperature of the infrared sensor 43 increases through being heated by the influence of the combustion heat from the flame F for heating generated in the heating appliance, and an error is included in the detection intensity of the infrared rays R1 because of an increase in the temperature of the infrared sensor 43, in the case where a correlation between the temperature of the infrared sensor 43 detected by the temperature sensor 52 and an error included in the detection intensity of the infrared rays R1 is known, an error corresponding to the temperature of the infrared sensor 43 can be specified on the basis of the correlation, so the carbon dioxide concentration C can be corrected so as to correct the error, thereby the accuracy of measurement of the carbon dioxide concentration C can be improved. The carbon dioxide sensor 40 shown in FIG. 11 has the same structure as that shown in FIG. 3 except for the above-described point.

For reference, as shown in FIG. 11, in the case where another temperature sensor is included, the carbon dioxide sensor 40 may include not only the temperature sensor 52 which detects the temperature of the infrared sensor 43 but also a temperature sensor which detects the temperature of components other than the infrared sensor 43. More specifically, for example, a temperature sensor which detects the temperature of the control circuit 47 or the case 41 or an ambient temperature in the case 41 may be included. In any of these cases, as in the case shown in FIG. 11, the carbon dioxide concentration C can be corrected to correct the error due to an increase in temperature, so the accuracy of measurement of the carbon dioxide concentration C can be improved.

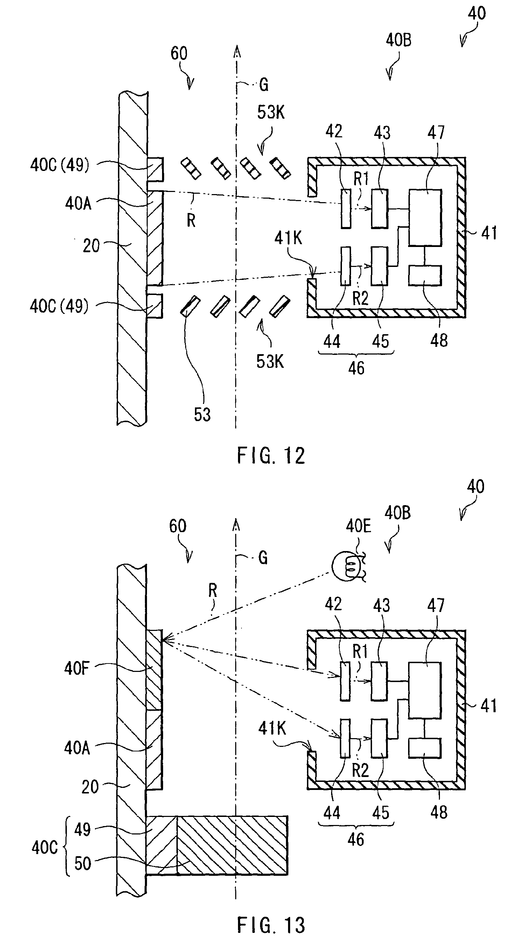

Secondly, for example, as shown in FIG. 12, the carbon dioxide sensor 40 (the measuring unit 40B) may include an optical path cylinder 53 which is wrapped around the optical path of the infrared rays R emitted from the infrared ray emitting plate 40A. As described above, the optical path cylinder 53 is a coating member which is wrapped around the optical path of the infrared rays so as to spatially separate the optical path of the infrared rays R from its surroundings, and the optical path cylinder 53 is made of, for example, the same material as that of the case 41. In this case, it is preferable that the generator 40C does not include the radiating system 50 (refer to FIG. 3) and includes only the power generating device 49, and two generator 40C are attached to the external cylinder 20 so that the infrared ray emitting plate 40A is sandwiched therebetween, thereby the optical path cylinder 53 is supported through connecting an end of the optical path cylinder 53 to the case 41, and connecting the other end of the optical path cylinder 53 to the generators 40C. The optical path cylinder 53 includes an air vent 53K for allowing the outside air G to pass therethrough via the optical path of the infrared rays R, for example, in a position corresponding to the outside air flow path 60. In other words, the optical path cylinder 53 also has a function as a radiating system which generates a temperature difference in the power generating device 49 through being cooled by the outside air G passing through the air vent 53K. For example, the structure of the optical path cylinder 53 including the air vent 53K is preferably a multi-aperture structure which allows the outside air G to pass therethrough diagonally to an extending direction of the outside air flow path 60 in a position corresponding to the outside air flow path 60 in order to smoothly pass the outside air G therethrough via the outside air flow path 60, while preventing the entry of unnecessary heat or light into the optical path cylinder 53. The air vent 53K may be disposed throughout the optical path cylinder 53, or may be partially disposed in the optical path cylinder 53. In the carbon dioxide sensor 40 including the optical path cylinder 53, while the infrared rays R emitted from the infrared ray emitting plate 40A are introduced into the measuring unit 40B through the outside air flow path 60 on the basis of the presence of the optical path cylinder 53, unnecessary heat or light can be prevented from being introduced into the measuring unit 40B through the outside air flow path 60. In other words, the carbon dioxide sensor 40 can prevent an error from being included in the result of detection by the infrared sensor 43 and the temperature sensor 46 (the infrared sensor 45) by the influence of the above-described unnecessary heat or light. Therefore, the intensity of the infrared rays R1 can be detected by the infrared sensor 43 with higher accuracy, and the temperature T of the infrared ray emitting plate 40A can be detected by the temperature sensor 46 (the infrared sensor 45) with higher accuracy. The carbon dioxide sensor 40 shown in FIG. 12 has the same structure as that shown in FIG. 3 except for the above-described point.

In the embodiment, as described above, from the viewpoint of measuring the carbon dioxide concentration C with high accuracy, the carbon dioxide sensor 40 includes only a non-power consumption type infrared source (the infrared ray emitting plate 40A) instead of the power consumption type infrared source (for example, filament bulb); however, the embodiment is not necessarily limited to this. More specifically, for example, as shown in FIG. 13, in addition to the non-power consumption type infrared source (the infrared ray emitting plate 40A) which emits the infrared rays R without using the electrical energy through being heated by the combustion heat from the flame F for heating, the carbon dioxide sensor 40 may include a power consumption type infrared source (a light source 40E) which emits the infrared rays through the use of the electrical energy. The light source 40E is an auxiliary infrared source which emits the infrared rays R through the use of the electrical energy. The light source 40E is, for example, a filament bulb or the like, and is disposed in parallel to the measuring unit 40B. In this case, for example, in order to introduce the infrared rays R emitted from the light source 40E to the external cylinder 20 into the measuring unit 40B, a reflective plate 40F is preferably bonded to the external cylinder 20 together with the infrared ray emitting plate 40A in parallel to the infrared ray emitting plate 40A. In the carbon dioxide sensor 40 including the light source 40E and the reflective plate 40F, in the case where the heating appliance operates, that is, in the case where the infrared rays R is emitted from the infrared ray emitting plate 40A, the infrared sensor 43 detects the intensity of the infrared rays R emitted from the infrared ray emitting plate 40A, and in the case where the heating appliance stops, that is, in the case where the infrared rays R is not emitted from the infrared ray emitting plate 40A, when the infrared rays R is emitted from the light source 40E instead of the infrared ray emitting plate 40A, the infrared sensor 43 detects the intensity of the infrared rays R introduced through the reflective plate 40F. In this case, for example, in the case where when the carbon dioxide concentration C is equal to or higher than the reference concentration CS, the user stops the heating appliance, and the infrared rays R are not emitted from the infrared ray emitting plate 40A, the infrared rays R are temporarily emitted from the light source 40E, thereby the carbon dioxide concentration C is measured through the use of the infrared rays R. Therefore, the user can judge whether the heating appliance can operate again or not on the basis of the carbon dioxide concentration C, that is, whether the carbon dioxide concentration C is lower than the reference concentration CS or not. More specifically, for example, as described above, when the display panel is disposed on the case 41, and the carbon dioxide concentration C is shown on the display panel in real time, the user who wants to operate the heating appliance again after stopping the heating appliance can judge whether the heating appliance can operate again or not on the basis of the carbon dioxide concentration C shown on the display panel. In the case where the light source 40E is used as a power consumption type infrared source, the electric power is consumed by using the light source 40E; however, as described above, the light source 40E is temporarily used as an auxiliary infrared source in the case where the heating appliance is stopped, so the power consumption for the use of the light source 40E is extremely low.

For confirmation, the structure of the carbon dioxide sensor 40 described in the above embodiment, and the above series of modifications of the structure of the carbon dioxide sensor 40 may be separately applied to the carbon dioxide sensor 40, or a combination of two or more modifications may be applied to the carbon dioxide sensor 40.

### [Second Embodiment]

Next, a second embodiment of the invention will be described below.

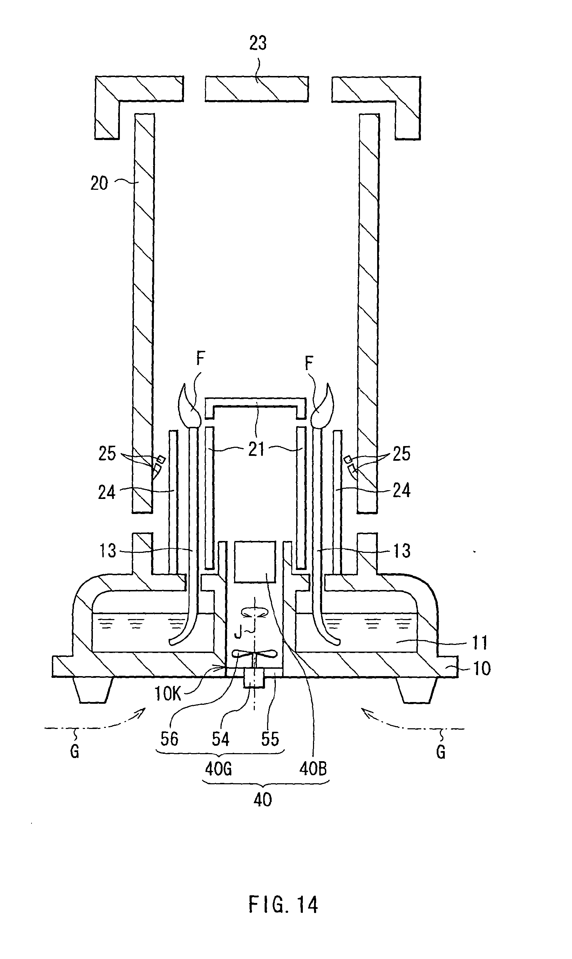

FIG. 14 shows a schematic sectional view of a heating appliance as a burning appliance according to the embodiment, and FIG. 14 shows a sectional view corresponding to the drawing shown in FIG. 7 described as a modification of the first embodiment. In FIG. 14, like components are denoted by like numerals as of the first embodiment. As "a carbon dioxide concentration measuring device" according to the invention is mounted in the heating appliance, and "a method of measuring carbon dioxide concentration" according to the invention is implemented on the basis of the operation of the heating appliance, "a carbon dioxide concentration measuring device" and "a method of measuring carbon dioxide concentration" will be also described below.

For example, as shown in FIG. 14, the heating appliance according to the embodiment has the same structure as that of the heating appliance shown in FIG. 7, except that the carbon dioxide sensor 40 includes a generator 40G which indirectly converts the heat energy of the combustion heat into electrical energy through the use of a convection effect of the outside air G which occurs on the basis of the heat energy of the combustion heat instead of the generator 40C which directly converts the heat energy of the combustion heat into electrical energy, and the position of the measuring unit 40B of the carbon dioxide sensor 40 is shifted.

The generator 40G is a power generating means for generating electric power through the use of combustion heat from the flame F for heating generated in the heating appliance as in the case of the generator 40C, and as described above, the generator 40G indirectly converts the heat energy of the combustion heat into electrical energy through the use of the convection effect of the outside air G. The generator 40G is disposed in the inlet 10K included in the tank 10, and the generator 40G includes a power generating device 54, a fixed wing 55 which supports the power generating device 54 and a rotor 56 which is connected to the power generating device 54, and is disposed so as to face the fixed wing 55. The generator 40G is connected to the measuring unit 40B through wiring (not shown). FIG. 14 shows the case where as the generator 40G is disposed in the inlet 10K, the position of the measuring unit 40B is shifted upward as described above unlike the case shown in FIG. 7.

The power generating device 54 actually converts the heat energy into electrical energy through the use of the convection effect of the outside air G, and the power generating device 54 includes, for example, a wind power generating device which generates electrical energy through the use of kinetic energy generated when the rotor 56 rotates according to the convection effect of the outside air G.

The fixed wing 55 includes a plurality of blades (not shown) disposed diagonally to the direction where the outside air G pass, and makes the outside air G rotate through the use of the blades. In other words, in order to smoothly and stably rotate the rotor 56 according to the convection effect of the outside air G, the fixed wing 55 controls the flow of the outside air G introduced into the heating appliance through the inlet 10K, that is, the fixed wing 55 rectifies an airflow.

The rotor 56 rotates around a rotation shaft J according to the convection effect of the outside air G, and has, for example, a propeller-shaped structure.

The power generation principle of the generator 40G will be briefly described below. When combustion heat is generated by the flame F for heating during the operation of the heating appliance, the outside air G is convected by the combustion heat. At this time, when the outside air G is introduced into the heating appliance through the inlet 10K, the outside air G is rectified by the fixed wing 55 and then arrives at the rotor 56, so the rotor 56 rotates through the use of the convection effect of the outside air G. Thereby, the rotation of the rotor 56 is transmitted to the power generating device 54 so as to generate electric power in the generator 40G.

The heating appliance according to the embodiment includes the generator 40G which generates electric power through the use of combustion heat, and more specifically, through indirectly converting the heat energy of the combustion heat into electrical energy through the use of the convection effect of the outside air G generated on the basis of the heat energy of combustion heat from the flame F for heating, so the carbon dioxide sensor 40 operates through the use of the electrical energy generated in the generator 40G. Therefore, by the same effects as those in the first embodiment, an error due to a change in the emission intensity of the infrared rays R or the impediment to the computing process by the control circuit 47 is not easily included in the result of measurement of the carbon dioxide concentration C. Accordingly, the accuracy of measurement of the carbon dioxide concentration C is improved, thereby the carbon dioxide concentration C in the outside air G can be measured with high accuracy.

The structure, functions, effects and modifications of the heating appliance according to the embodiment, the effects of the carbon dioxide concentration measuring device and the method of measuring carbon dioxide concentration, and so on are the same as those in the first embodiment.

Although the invention is described referring to some embodiments, the invention is not limited to the above embodiments, and can be variously modified. More specifically, for example, in the above embodiments, the generator includes the thermoelectric device or the wind power generating device as a power generating device so as to generate electrical energy through the use of combustion heat from the flame for heating; however, the invention is not necessarily limited to this. As long as the electrical energy can be generated through the use of combustion heat, the generator may include any other power generating device instead of the thermoelectric device or the wind power generating device. As an example, as described above, the generator can includes a thermo photo voltaic (TPV) device or the like as "any other power generating device" instead of the thermoelectric device. In the case where the generator include any other power generating device, the same effects as those in the above embodiments can be obtained.

Moreover, for example, in the above embodiments, the case where the burning appliance according to the invention is applied to a heating appliance such as a kerosene stove is described; however, the invention is not necessarily limited to this, and the burning appliance according to the invention may be applied to any other heating appliance except for the kerosene stove, or any other appliance except for the heating appliance. As "any other heating appliance", for example, a coal stove, a fireplace or the like is cited. Further, as "any other appliances", for example, a boiler, a blast furnace or the like is cited. In the case where the burning appliance according to the invention is applied to any other heating appliance or any other appliance, the same effects as those in the embodiments can be obtained.

For example, the carbon dioxide concentration measuring device or the method of measuring carbon dioxide concentration according to the invention can be applied to a burning appliance such as a heating appliance (for example, a kerosene stove).

Obviously many modifications and variations of the present invention are possible in the light of the above teachings. It is therefore to be understood that within the scope of the appended claims the invention may be practiced otherwise than as specifically described.

## Claims

1. A carbon dioxide concentration measuring device, measuring the carbon dioxide concentration in outside air through the use of a phenomenon in which infrared rays are absorbed by carbon dioxide, the carbon dioxide concentration measuring device comprising:
a power generating means which generates electric power through the use of combustion heat;
a first infrared ray intensity detecting means which operates through the use of electrical energy generated by the power generating means, and detects the intensity of infrared rays emitted from an infrared source; and
a computing means which operates through the use of electrical energy generated by the power generating means, and computes the carbon dioxide concentration at least on the basis of the result of detection by the first infrared ray intensity means.

2. A carbon dioxide concentration measuring device according to claim 1, wherein
the power generating means directly converts the heat energy of the combustion heat into electrical energy.

3. A carbon dioxide concentration measuring device according to claim 2, wherein
the power generating means includes a thermoelectric device and a radiating system for generating a temperature difference in the thermoelectric device.

4. A carbon dioxide concentration measuring device according to claim 1, wherein
the power generating means indirectly converts the heat energy of the combustion heat into electrical energy through the use of a convection effect of outside air generated by the heat energy of the combustion heat.

5. A carbon dioxide concentration measuring device according to claim 4, wherein
the power generating means includes a wind power generating device.

6. A carbon dioxide concentration measuring device according to claim 1, further comprising:
a storing means which stores electrical energy generated by the power generating means.

7. A carbon dioxide concentration measuring device according to claim 1, further comprising:
a first optical filter which selectively allows infrared rays in a first wavelength range in the infrared rays emitted from the infrared source to pass therethrough, and thereby introduces the infrared rays in the first wavelength range into the first infrared ray intensity detecting means.

8. A carbon dioxide concentration measuring device according to claim 7, wherein
the first optical filter selectively allows infrared rays in a wavelength range including a wavelength of 4.26 µ m or 4.43 µ m as the first wavelength range to pass therethrough.

9. A carbon dioxide concentration measuring device according to claim 1, wherein
the infrared source operates through the use of electrical energy generated by the power generating means to emit infrared rays.

10. A carbon dioxide concentration measuring device according to claim 9, further comprising:
the infrared source,
wherein the power generating means, the first infrared ray intensity detecting means and the computing means can be attached to a combustion heat generator which generates the combustion heat.

11. A carbon dioxide concentration measuring device according to claim 1, wherein
the infrared source is heated by the combustion heat to emit infrared rays without using electrical energy generated by the power generating means.

12. A carbon dioxide concentration measuring device according to claim 11, wherein
the infrared source is a combustion heat generator which generates the combustion heat, and
the power generating means, the first infrared ray intensity detecting means and the computing means can be attached to the combustion heat generator.

13. A carbon dioxide concentration measuring device according to claim 12, wherein
the combustion heat is based on a flame generated in the combustion heat generator, and
the infrared source is a heated member which constitutes a part of the combustion heat generator, and is heated by the combustion heat.

14. A carbon dioxide concentration measuring device according to claim 11, further comprising:
the infrared source,
wherein the power generating means, the first infrared ray intensity detecting means and the computing means can be attached to a combustion heat generator which generates the combustion heat.

15. A carbon dioxide concentration measuring device according to claim 14, wherein
the combustion heat is based on a flame generated in the combustion heat generator, and
the infrared source is an infrared ray emitting member being attached to a heated member which constitutes a part of the combustion heat generator, and is heated by the combustion heat.

16. A carbon dioxide concentration measuring device according to claim 1, wherein
an outside air flow path for allowing outside air to pass therethrough is disposed between the infrared source and the first infrared ray intensity detecting means, and
the first infrared ray intensity detecting means detects the intensity of infrared rays introduced through the outside air flow path.

17. A carbon dioxide concentration measuring device according to claim 1, further comprising:
a first temperature detecting means which detects the temperature of the infrared source,
wherein the computing means computes the carbon dioxide concentration on the basis of the result of detection by the first infrared ray intensity detecting means and the result of detection by the first temperature detecting means.

18. A carbon dioxide concentration measuring device according to claim 17, wherein
the first temperature detecting means includes:
a second infrared ray intensity detecting means which detects the intensity of infrared rays emitted from the infrared source; and
a second optical filter which selectively allows infrared rays in a second wavelength range which is different from the first wavelength range detected by the first infrared ray intensity detecting means in infrared rays emitted from the infrared source to pass therethrough, and thereby introduces the infrared rays in the second wavelength range into the second infrared ray intensity detecting means.

19. A carbon dioxide concentration measuring device according to claim 1, further comprising:
a second temperature detecting means which detects the temperature of the first infrared ray intensity detecting means,
wherein the computing means computes the carbon dioxide concentration on the basis of the result of detection by the first infrared ray intensity detecting means and the result of detection by the second temperature detecting means.

20. A carbon dioxide concentration measuring device according to claim 1, further comprising:
a containing member which contains the first infrared ray intensity detecting means and the computing means so as to spatially separate the first infrared ray intensity detecting means and the computing means from their surroundings.

21. A carbon dioxide concentration measuring device according to claim 1, further comprising:
a coating member which wraps the optical path of infrared rays emitted from the infrared source so as to spatially separate the optical path of the infrared rays from its surroundings.

22. A carbon dioxide concentration measuring device according to claim 21, wherein
the coating member has an air vent for allowing outside air to pass therethrough via the optical path of the infrared rays.

23. A carbon dioxide concentration measuring device according to claim 22, wherein
the power generating means include a thermoelectric device, and
the coating member also has a function as a radiating system for generating a temperature difference in the thermoelectric device through being cooled by outside air passing through the air vent.

24. A carbon dioxide concentration measuring device according to claim 11, wherein
an auxiliary infrared source which emits infrared rays through the use of electrical energy generated by the power generating means is further included together with the infrared source which emits infrared rays without using electrical energy generated by the power generating means, and
when infrared rays are emitted from the auxiliary infrared source instead of the infrared source, the first infrared ray intensity detecting means detects the intensity of infrared rays emitted from the auxiliary infrared source.

25. A method of measuring carbon dioxide concentration for measuring the carbon dioxide concentration in outside air through the use of a phenomenon in which infrared rays are absorbed by carbon dioxide,
wherein while electric power is generated through the use of combustion heat, the intensity of infrared rays which are emitted from an infrared source is detected, and the carbon dioxide concentration is computed on the basis of the result of detection of the intensity of the infrared rays.

26. A burning appliance, having a function of measuring the carbon dioxide concentration in outside air through the use of a phenomenon in which infrared rays are absorbed by carbon dioxide, the burning appliance comprising:
a combustion heat generator which generates combustion heat;
a power generating means which generates electric power through the use of the combustion heat;
an infrared ray intensity detecting means which operates through the use of electrical energy generated by the power generating means, and detects the intensity of infrared rays emitted from an infrared source; and
a computing means which operates through the use of electrical energy generated by the power generating means, and computes the carbon dioxide concentration on the basis of the result of detection by the infrared ray intensity detecting means.

27. A burning appliance according to claim 26, wherein
the combustion heat is based on a flame for heating.

28. A burning appliance according to claim 27, wherein
the combustion heat generator includes an ignition means which produces the flame by ignition through the use of electrical energy generated by the power generating means.

29. A burning appliance according to claim 27, wherein
the combustion heat generator further includes:
an outside air temperature detecting means which detects the temperature of outside air; and
a firepower adjusting means which operates through the use of electrical energy generated by the power generating means, and adjusts the firepower of the flame on the basis of the result of detection by the outside air temperature detecting means.
